# EUROPÄISCHE PATENTANMELDUNG

(11) **EP 4 254 290 A1**
(43) Veröffentlichungstag der Anmeldung: **04.10.2023**
(21) Anmeldenummer: 23165034.2
(22) Anmeldetag: 29.03.2023
(51) Int. Cl.: G06Q 10/087

(54) **VERFAHREN ZUR STEUERUNG UND ÜBERWACHUNG EINES INTRALOGISTISCHEN PROZESSES**

(30) Priorität: 01.04.2022 DE 102022107824
(71) Anmelder: Orgatex GmbH, 40764 Langenfeld (DE)
(72) Erfinder: Mueller, Patrick, 34132 Kassel (DE)
(74) Vertreter: Demski, Siegfried

(57) **Zusammenfassung**

Die Erfindung betrifft ein Verfahren zur Steuerung und Überwachung eines intralogistischen Prozess eines Warenlagers 30 oder eines FIFO-Bahnhofs 1 für Flurförderfahrzeuge 3.

Um den intralogistischen Prozess zu optimieren und eine jederzeitige Überwachung zu ermöglichen, sowie unter Verwendung eines geringstmöglichen Aufwandes wird eine Lösung mit Hilfe eines Speicher- und Serverdienstes (Cloud) 21, 31 vorgeschlagen, welcher die Möglichkeit einer Mobilfunkanbindung sämtlicher kabelloser Sensorelemente 20 vorsieht, um die Daten sowohl zur Cloud 21, 31 zu senden oder zu empfangen, damit eine Echtzeiterfassung von Bestandsveränderungen sowie eine Echtzeitübertragung der Sensordaten zum Speicher- und Serverdienst (Cloud) 21, 31 möglich ist. Die Daten werden von dem Speicher- und Serverdienst 21, 31 für Anzeigen verwendet und autorisierten Nutzern kann zusätzlich über einen Mobilfunkzugang die Auswertung und Bereitstellung der Sensordaten ermöglicht werden.

## Beschreibung

Die Erfindung betrifft ein Verfahren und eine Vorrichtung zur Steuerung und Überwachung eines intralogistischen Prozesses eines Warenlagers oder eines FIFO-Bahnhofs für Flurförderfahrzeuge.

Zur Optimierung einer Lagerverwaltung, beispielsweise einem Hochregallager oder in Verkaufsräumen sowie für die Überwachung eines FIFO-Bahnhofes ist es bekannt Sensoren einzusetzen, die Veränderungsdaten zur Überwachung und Kontrolle der zugeführten und entnommenen Waren über ein Gateway zu erfassen und einem Rechner zuzuführen. Die Verbindung der Sensoren zum Gateway erfolgt hierbei über Bluetooth, wodurch eine umfangreiche Infrastruktur in einem Warenlager, Verkaufsräumen oder Montagehallen erforderlich wird. Eine Bluetooth-Verbindung besitzt nur eine geringe Reichweite, sodass eine Vielzahl von Empfängerkomponenten notwendig ist, damit eine Bluetooth-Übertragung von sämtlichen Sensoren sichergestellt werden kann. Hierdurch entstehen sehr hohe Investitionskosten, die zudem sehr wartungsintensiv werden können. Ansonsten kann eine Übertragung der Sensordaten über Bluetooth nicht in ausreichender Form sichergestellt werden.

Mithilfe von Sensoren, welche die Daten übermitteln soll beispielsweise eine Überwachung erfolgen, wie viele Waren und an welchen Orten die Waren in einem Warenlager oder Verkaufsräumen abgelegt worden sind. Für einen FIFO-Bahnhof muss die Anzahl der vorhandenen Flurförderfahrzeuge, beispielsweise Transportwagen mit den zugehörigen Waren überwacht werden, um sicher zu stellen, dass die Zuführung der Waren für eine kontinuierliche Montage gewährleistet ist und weitere Transportwagen rechtzeitig angefordert werden.

FIFO-Bahnhöfe werden für den Transport und die Bereitstellung von Produkten benötigt, wobei ein FIFO-Bahnhof über ein Schienensystem verfügt, in denen einzelne Flurförderfahrzeuge zumindest kurzzeitig geparkt werden können. Das Prinzip eines solches Bahnhofes besteht darin die zuerst abgestellten Flurförderfahrzeuge als erstes wieder zu entnehmen, wobei aufgrund einer Vielzahl von einzelnen Schienen das Prinzip sich jeweils auf eine Schiene bezieht. Die Bezeichnung FIFO stammt von Firstin, Firstout, daher die Bezeichnung FIFO-Bahnhof. Dem FIFO-Bahnhof zugeführte Flurförderfahrzeuge können hierbei sowohl manuell als auch elektromotorisch verfahrbar sein und werden zum kurzfristigen Abstellen dem FIFO-Bahnhof zugeführt. Die Flurförderfahrzeuge transportieren Waren in Form von Halbzeugen, Einzelteilen oder Komponenten, die für den Aufbau beispielsweise zur Montage eines Kraftfahrzeuges benötigt werden. Speziell bei der Montage von Kraftfahrzeugen werden laufend neue Teile benötigt, die über die Flurförderfahrzeuge angeliefert und für die Monteure bereitgestellt werden, wobei zeitgenau die richtigen Teile zur richtigen Karosserie zur Verfügung gestellt werden müssen. Ein FIFO-Bahnhof wird daher laufend durch zugeführte Flurförderfahrzeuge bestückt, während gleichzeitig eine Entnahme der Flurförderfahrzeuge rückseitig erfolgt, um die Komponenten zu verbauen und die leeren Flurförderfahrzeuge in den Kreislauf zurückzuführen.

Ein FIFO-Bahnhof kann hierbei größere Abmessungen mit einer Vielzahl von Schienen aufweisen, sodass schnell die Übersicht verloren gehen kann und das für den Transport vorgesehene Personal sehr leicht im Eingangsbereich des FIFO-Bahnhofes den Überblick verliert. Ebenso verhält es sich ausgangsseitig des FIFO-Bahnhofes, weil durch Unachtsamkeit ein falsches Flurförderfahrzeug herausgezogen werden kann, sodass die damit transportierten Komponenten, beispielsweise für den Aufbau eines Kraftwagens oder Lastkraftwagens falsch verbaut werden. Entsprechende Korrekturen sind kaum durchführbar oder führen häufig zu einem unerwünschten Stillstand des Montagebandes.

Ähnlich verhält es sich in einem Warenlager, weil immer eine ausreichende Anzahl von Waren zur Verfügung stehen muss und im Falle eines geringen Lagerbestandes oder Fehlbestandes sofort neue Waren bestellt werden müssen.

Der Begriff des Warenlagers ist hierbei weit auszulegen und erstreckt sich im weitesten Sinne von dem Eingang einer Ware, die Lagerung und den Versand zu den Kunden. Nur bei einer Optimierung des gesamten intralogistischen Prozesses von der Bestellung bis zum Versand kann ein Warenlager oder gegebenenfalls ein für Endkunden zur Verfügung gestellter Verkaufsraum mit geringstmöglichem Aufwand und effizient unterhalten werden.

Aus der DE 10 2010 029 996 A1 ist eine Bestandsüberwachung von Durchlauflagern mittels RFID bekannt. Mithilfe der Bestandsüberwachung kann die Lagerverwaltung automatisiert und der Lagerbestand optimiert werden. In diesem Fall handelt es sich um ein Durchlauflager für Rollwagen zum Warentransport. Der RFID Kommunikationssystem wird für die Lagerlogistik eingesetzt. Problematisch sind aber die Reichweiten der RFID-Sender, sodass eine Vielzahl von Empfängern erforderlich ist und erhebliche Kosten verursacht.

Der vorliegenden Erfindung liegt die Aufgabenstellung zugrunde, ein infrastrukturarmes Informationssystem aufzuzeigen, mit dem sowohl Warenlager, Verkaufsräume oder FIFO-Bahnhöfe überwacht werden können.

Zur Lösung der Aufgabenstellung ist ein Verfahren zur Steuerung und Überwachung eines intralogistischen Prozesses eines Warenlagers oder eines FIFO-Bahnhofes für Flurförderfahrzeuge vorgesehen, welches folgende Schritte umfasst:
- einen zentralen onlinebasierten Speicher- und Serverdienst (Cloud),
- kabellose Sensorelemente für ein Lager, Warenbehälter, Etiketten und/oder Flurförderfahrzeuge, welche über eine Mobilfunkanbindung Daten senden und/oder empfangen,
- Echtzeiterfassung von Bestandsveränderungen,
- Echtzeitübertragung der Sensordaten zum Speicher- und Serverdienst (Cloud),
- Empfang von Daten des Speicher- und Serverdienstes soweit für die Anzeige von Informationen erforderlich,
- Auswertung und Bereitstellung der Sensordaten für autorisierte Nutzer über einen Mobilfunkzugang.

Vorteilhafte Ausgestaltungen des Verfahrens sind in den abhängigen Ansprüchen angegeben.

Durch die Verwendung eines Speicher- und Serverdienstes in Form einer Cloud kann eine zentrale onlinebasierte Erfassung sämtlicher Daten erfolgen. Hierzu werden kabellose Sensorelemente verwendet, welche sowohl für ein Warenlager, für Warenbehälter, Etiketten und/oder Flurförderfahrzeuge verwendet werden können, wobei die Sensorelemente über eine Mobilfunkanbindung Daten senden und/oder empfangen können. Über die Mobilfunkanbindung können die Daten sehr schnell von dem Speicher- und Serverdienst aufgenommen werden und einerseits zur Auswertung herangezogen werden sowie andererseits autorisierten Nutzern über ein Mobilfunkzugang zur weiteren Verarbeitung zur Verfügung gestellt werden.

Auf diese Weise besteht ebenfalls die Möglichkeit die ermittelten und ausgewerteten Sensordaten beispielsweise an das IT-System eines Produzenten oder Lieferanten zu übermitteln und nach Aktualisierung anschließend den Speicher- und Serverdienst zurück zu senden, um über Visualisierungsflächen gegebenenfalls die Informationen wiederzugeben. Der Vorteil dieses Verfahrens besteht darin, dass sämtliche Komponenten des Überwachungssystem in der Lage sind miteinander zu kommunizieren und jeweils für sich alleine zur agieren. Ein wesentlicher Vorteil besteht weiterhin darin, dass diese Lösung eine hohe Flexibilität und einen sukzessiven Einstieg mit geringen Investitionskosten ermöglicht, da die Schaffung aufwendiger Infrastrukturen und der Aufbau eines lokalen Netzes nicht erforderlich ist und eine sofortige Anpassungsmöglichkeit auf die Bedürfnisse der Kunden beziehungsweise Lieferanten jederzeit möglich ist. Ein weiterer wesentlicher Vorteil besteht darin, dass auf ein Gateway in Form eines Routers verzichtet werden kann und somit keine Kommunikationsprobleme auf großen Firmengeländen aufgrund einer mangelhaften Überdeckung auftreten. Darüber hinaus ist die Installation und Inbetriebnahme wesentlich einfacher, weil lediglich eine Anbindung an das Mobilfunknetz erforderlich ist, wobei dieses mit einer großen Reichweite und Überdeckung zur Verfügung steht.

Über den Speicher- und Serverdienst in der Cloud stehen somit alle oder nur ausgewählte Informationen sowohl den Kunden als auch den Lieferanten und den Organisatoren zur Verfügung, damit ein reibungsloser Ablauf der Warenlieferung vom Hersteller über den Lieferanten bis zum Endkunden beziehungsweise zur Verarbeitung der entsprechenden Komponenten für eine Fertigungsstraße möglich ist.

Zur Durchführung des Verfahrens ist im weiteren vorgesehen, dass die Waren oder Flurförderfahrzeuge sowie die damit transportierten Waren durch optische, kapazitive oder induktive kabellose Sensoren mit Mobilfunkanbindung erfasst werden. Diese Erfassung kann bei einem Warenlager beispielsweise durch Einbringen in ein Regal oder Zuführung in das Lager erfolgen, ebenso wie das Zuführen von Flurförderfahrzeugen in einen FIFO-Bahnhof. Die erfassten Daten werden anschließend sofort dem Speicher- und Serverdienst zugeführt, sodass eine sofortige Bearbeitung der sich ständig ändernden Daten erfolgen kann. Auf diese Weise wird eine Prozessoptimierung erreicht und die sofortige zur Verfügungstellung von aktualisierten Daten sowohl für die Lieferanten, Kunden als auch für den Produktionsablauf ermöglicht.

Um die Überwachung zu optimieren ist im weiteren vorgesehen, dass eine Ausstattung der Warenlageregale, Warenbehälter oder Flurförderfahrzeuge durch elektronische Etiketten mit Mobilanbindung erfolgt. Auf diese Weise können somit alle Warentransporte lückenlos kontrolliert werden und die Daten in Echtzeit weiterverarbeitet werden, wobei über die elektronischen Etiketten eine Anzeige wichtiger Daten möglich ist.

In weiterer besonderer Ausgestaltung ist vorgesehen, dass Informationen über die Waren in einem Warenlager oder die mit einem Flurförderfahrzeug transportierten Waren über elektronische Etiketten dem Speicher- und Serverdienst bereitgestellt werden. Die elektronischen Etiketten weisen ebenfalls eine Mobilfunkanbindung auf und können somit Daten senden als auch empfangen. Dieser Vorteil kann beispielsweise dazu genutzt werden die elektronischen Etiketten im Warenlager oder in den Verkaufsräumen laufend zu aktualisieren, ohne dass ein manueller Eingriff erfolgen muss. Die elektronischen Etiketten sind hierzu mit einem Display ausgestattet auf dem weitere Informationen über die Waren angegeben werden können, beispielsweise in einem Verkaufsraum die Verpackungseinheit und den Preis oder in einem Warenlager beispielsweise den Zeitpunkt der Einlagerung einer vorgesehenen späteren Entnahme besondere Ausstattungsmerkmale der Waren oder den Verwendungszweck

Wichtig ist in diesem Zusammenhang, dass durch die Sensorelemente die Zuführung von Produkten in einem Warenlagerregal oder von Flurförderfahrzeugen mit Produkten in einem FIFO-Bahnhof ebenso wie die Entnahme erfasst werden können. Nur durch diese zeitnahe Erfassung ist sichergestellt, dass sowohl das Warenlager als auch der FIFO-Bahnhof dem aktuellen Status entspricht. Mithilfe des Speicher- und Serverdienstes ist es aber ebenso möglich eine Zuweisung des Lagerplatzes innerhalb eines Warenlagers oder einer Schiene eines FIFO-Bahnhofes vorzunehmen.

Durch die Erfassung des aktuellen Ist-Zustandes eines Warenlagers besteht zudem die Möglichkeit einen Mindestbestand für das Warenlager jederzeit zu überprüfen und neue Waren von den jeweiligen Lieferanten beziehungsweise Herstellern anzufordern. Ähnlich verhält es sich bei einem FIFO-Bahnhof. Ein Bestellvorgang bei den Produktherstellern beziehungsweise eine Zuführung weiterer Flurförderfahrzeuge kann somit ohne weiteres überwacht und gesteuert werden. Zusätzlich besteht die Möglichkeit, dass durch die Ausgabe von Warnsignalen in Form von optischen oder akustischen Signalen auf ein Fehlstand hingewiesen wird, wobei gegebenenfalls auch eine Rückmeldung an ein Waren-Wirtschaftssystem erfolgt oder ein Sachbearbeiter unmittelbar über den Fehlbestand informiert wird, soweit Lagerbestände nicht in einem vorgesehenen Zeitraum ausgeglichen worden sind. Darüber hinaus besteht die Möglichkeit eine Ausgabe von Informationen an einen Supervisor vorzunehmen, wenn ein dauerhaftes Unterschreiten des Lagerbestandes vorliegt oder der Nachschub von Flurförderfahrzeugen unterbrochen ist.

Um für das Personal oder einen Supervisor ausreichende Informationen über das Warenlager beziehungsweise einen FIFO-Bahnhof zur Verfügung zu stellen ist im weiteren vorgesehen, dass eine von dem Speicher- und Serverdienst gesteuerte Anzeigeeinheit zur Darstellung des aktuellen Ist-Zustandes des Warenlagers oder des Schienensystems in Form einer Grafik zur Verfügung gestellt wird.

Als besonders vorteilhaft ist hierbei vorgesehen, dass die verwendeten Etiketten, insbesondere Etiketten aus ESI (elektronic self label) Etiketten bestehen, welche mit einem nichtflüchtigen Display ausgestattet zur Darstellung von Grafikdaten und alphanummerischen Informationen verwendet werden können und mit einer stationären Energieversorgung in Form einer langlebigen Batterie ausgestattet sind oder elektromagnetische Energie aus einem Funkfeld entnehmen. Derartige Etiketten können in einem Warenlager verwendet werden, um Informationen über die eingelagerten Waren anzuzeigen beziehungsweise in Verkaufsräumen die Kunden über die aktuellen Verkaufspreise und Verpackungsgrößen zu informieren. Mithilfe der langlebigen Batterie ist die Energieversorgung gewährleistet, wobei für die nicht flüchtigen Displays solche verwendet werden, die einen nur geringen Stromverbrauch aufweisen. Darüber hinaus besteht die Möglichkeit, dass elektromagnetische Energie aus einem Funkfeld zum Aufladen der Batterie entnommen wird.

In weiterer besonderer Ausgestaltung ist vorgesehen, dass die elektronischen Etiketten zumindest einen Button aufweisen, dessen Funktion im Speicher- und Serverdienst hinterlegt ist und vom Anwender frei programmierbar ist. Der Button ist gleichzeitig eine Schnittstelle, die den Kunden zur Verfügung gestellt wird, sodass der Kunde über eine Befehlskette des Buttons nicht nur den Status und Warendaten direkt abrufen kann, sondern darüber hinaus auch den Status einer Bestellung und deren Lieferzeiten. Ferner wird jedem Anwender eine Schnittstelle zur Verfügung gestellt, um aktuelle Daten abzurufen, den Status der Warenlieferung zu überprüfen, Daten zu aktualisieren oder gegebenenfalls die Funktion des zumindest einen Buttons zu ändern. Hierbei besteht für jeden Kunden oder Lieferanten die Möglichkeit eine individuelle Programmierung des Buttons vorzunehmen, um seine gewünschten Informationen zu erhalten.

Der vorliegenden Erfindung liegt im weiteren die Aufgabenstellung zugrunde, ein infrastrukturarmes Informationssystem aufzuzeigen, mit welchem ein Warenlager, Verkaufsräume oder ein FIFO-Bahnhof ausgestattet werden kann, um eine optimale Vernetzung zu erreichen.

Zur Lösung der Aufgabenstellung ist ein Cloud-Informationssystem für einen intralogistischen Prozess zur Bestandsüberwachung eines Warenlagers oder eines FIFO-Bahnhofs für Flurförderfahrzeuge vorgesehen, welches folgende Komponenten umfasst:
- einen zentralen online basierten Speicher- und Serverdienst (Cloud),
- kabellose Sensorelemente mit einer Mobilfunkanbindung zur Identifizierung der Waren, Warenbehälter, Etiketten und/oder Flurförderfahrzeuge sowie der damit transportierten Waren,
- Erfassung der Zuführung und Entnahme von Waren aus dem Warenlager oder von Flurförderfahrzeugen aus dem FIFO-Bahnhof durch kabellose Sensorelemente,
- Übertragung der Sensordaten zu einem onlinebasierten Speicher- und Systemdienst (Cloud) in Echtzeit und
- Empfang von Daten aus der Cloud über das Mobilfunknetz zur Anzeige durch ein elektronisches Etikett.

Weitere vorteilhafte Ausgestaltungen des Cloud-Informationssystems sind in den Unteransprüchen angegeben.

Um ein Warenlager gegebenenfalls Verkaufsräume oder einen FIFO-Bahnhof optimal zu überwachen wird erfindungsgemäß ein Cloud-Informationssystem zugrunde gelegt, welches für einen intralogistischen Prozess verwendet werden kann unter der Voraussetzung, dass das Informationssystem über eine ausreichende Anzahl von kabellosen Sensorelementen mit einer Mobilfunkanbindung verfügt. Die Sensorelemente sind zur Identifizierung der Waren, Warenbehälter, Etiketten und/oder Flurförderfahrzeuge sowie die damit transportierten Waren erforderlich. Hierbei kann eine Überwachung der einzelnen Waren aber ebenso des Warenlagers erfolgen. Wichtig ist in diesem Fall, dass sowohl die Zuführung als auch die Entnahme von Waren aus einem Warenlager oder von Flurförderfahrzeugen aus dem FIFO-Bahnhof in ausreichender Form erfasst wird, beispielsweise durch kabellose Sensorelemente. Eine Übertragung der Sensordaten zu einem onlinebasierten Speicher- und Systemdienst (Cloud) kann in Echtzeit erfolgen und ebenso der Empfang der Daten von der Cloud über das Mobilfunknetz zur Anzeige beispielsweise von Informationen für ein elektronisches Etikett. Auf diese Weise besteht somit die Möglichkeit nicht nur eine Erfassung der Warenzuführung oder -entnahme sicherzustellen, sondern gegebenenfalls über die Etiketten auch weiterer Informationen den Kunden zur Verfügung zu stellen, beispielsweise in Verkaufsräumen, wobei die Informationen aus Mengenangaben, Preisangaben oder über Inhaltsstoffe bestehen können. Soweit es sich um einen FIFO-Bahnhof handelt, können ebenfalls Etiketten verwendet werden, die sich unmittelbar an den Flurförderfahrzeugen befinden, um die damit transportierten Waren zu kennzeichnen und entsprechend zuzuordnen, was insbesondere an einem Montageband von äußerster Wichtigkeit ist, um die richtigen Waren für den vorgesehenen Verwendungszweck einzusetzen. Soweit die elektronischen Etiketten über eine Mobilfunkanbindung eine direkte Verbindung zum Speicher- und Serverdienst (Cloud) besitzen, ist eine Aktualisierung und insbesondere ein Austausch der vorhandenen Informationen ohne weiteres möglich, sodass die Etiketten beispielsweise an den Flurförderfahrzeugen fest installiert werden und über das Cloudsystem eine Aktualisierung der Etiketten erfolgen kann, sobald neue Waren in die Flurförderfahrzeuge eingelagert werden.

In weiterer Ausgestaltung der Erfindung ist vorgesehen, dass die Waren oder Flurförderfahrzeuge sowie die damit transportierten Waren durch optische, kapazitive oder induktive Sensoren einer Erfassungseinrichtung mit Mobilfunkanbindung scannbar sind. Die Erfassungseinrichtung kann beispielsweise aus einem Portal bestehen, durch welches die Flurförderfahrzeuge hindurchgeschoben oder soweit es sich um selbstfahrende Flurförderfahrzeuge handelt, hindurch fahren müssen. Durch optische Sensoren, beispielsweise Kameras kann die transportierte Ware, beispielsweise durch einen Bildvergleich identifiziert werden, um eine entsprechende Auswahl der Schienen im FIFO-Bahnhof vorzunehmen. Alternativ sind auch kapazitive und induktive Sensoren verwendbar, welche vorhandene Identifizierungscode abtasten, um somit die Flurförderfahrzeuge eindeutig zu identifizieren. Die verwendeten Sensoren besitzen immer eine direkte Mobilfunkanbindung, sodass die Informationen unmittelbar an den Speicher- und Serverdienst weitergeleitet werden.

Der besondere Vorteil des Cloud-Informationssystem besteht darin, dass ein FIFO-Bahnhof zentral verwaltet und überwacht werden kann, und zwar durch die Identifizierung der dem FIFO-Bahnhof zugeleiteten Flurförderfahrzeuge beziehungsweise der damit transportierten Waren. Hierzu werden Sensoren eingesetzt, die eine eindeutige Identifizierung ermöglichen, um über den Speicher- und Serverdienst die Waren exakt zu erfassen und eine Verarbeitungsreihenfolge festzulegen, die gleichzeitig damit verbunden ist, dass eine bestimmte Schiene des Schienensystems als Parkposition verwendet wird, um auf diese Weise sicherzustellen, dass die Ware auch für die sofortige Weiterverarbeitung zur Verfügung steht. Hierbei wird insbesondere die Zuführung und Entnahme der Flurförderfahrzeuge aus dem Schienensystem überwacht und damit der aktuelle Ist-Zustand des FIFO-Bahnhofes jederzeit ermittelt, wobei dieser in einer Anzeigeeinheit zusätzlich dargestellt werden kann, damit durch die Bediener des FIFO-Bahnhofes ein manueller Eingriff für den Notfall möglich ist.

In Ausgestaltung der Erfindung ist vorgesehen, dass eine optische Anzeige in Form einer Ampel, durch farblich gekennzeichnete Pfeile, Sperrsymbole und/oder eine Schranke für jede Schiene für die Zuführung und Entnahme der Flurförderfahrzeuge eingangsseitig und ausgangsseitig vorhanden ist, welche von dem Speicher- und Serverdienst ansteuerbar sind. Mithilfe einer Schranke oder mithilfe einer optischen Anzeige, beispielsweise in Form einer Ampel oder durch farblich gekennzeichnete Pfeile kann bei einem FIFO-Bahnhof sowohl die Zuführung der Flurförderfahrzeuge als auch die Entnahme signalisiert werden. Zusätzlich besteht die Möglichkeit durch eine Schranke die Zuführung oder Entnahme zu steuern. Hierbei besteht ohne weiteres die Möglichkeit, dass sowohl die optischen Anzeigen als auch die Schranke mithilfe des Speicher- und Serverdienstes angesteuert werden.

In weiterer Ausgestaltung der Erfindung ist vorgesehen, dass eine von dem Speicher- und Serverdienst gesteuerte optische Anzeige eingangsseitig für die Schienenauswahl und ausgangsseitig zur Entnahme der Flurförderfahrzeuge vorgesehen ist. Die eingangsseitige optische Anzeige erleichtert bei einer manuellen Zuführung der Flurförderfahrzeuge dem Personal die Arbeit und verhindert eine falsche Zuordnung, wobei die optische Anzeige gegebenenfalls zusätzlich durch ein Schrankensystem unterstützt werden kann, welches eingangsseitig die Schienen sperrt bis auf die Schiene, in die das Flurförderfahrzeug eingeschoben werden soll. Ähnlich verhält es sich ausgangsseitig, wo die Monteure anhand einer optischen Anzeige ersehen können, welches Flurförderfahrzeug als nächstes aus dem FIFO-Bahnhof herausgezogen werden muss, um die entsprechenden Komponenten beziehungsweise Einzelteile zu verarbeiten. Auch hier besteht ohne weiteres die Möglichkeit, dass neben einer optischen Anzeige eine Schranke vorgesehen ist, welche nur die Möglichkeit der Entnahme eines ausgewählten Flurförderfahrzeuges bietet.

Zur Überwachung und Steuerung des FIFO-Bahnhofes werden in einem ersten Schritt die Flurförderfahrzeuge oder die damit transportierten Waren identifiziert, wobei vorzugsweise jedes Flurförderfahrzeug mit elektronischen Etiketten oder entsprechenden Codierungen ausgestattet ist, die von Sensoren erfasst werden können, um eine eindeutige Identifizierung des Flurförderfahrzeuges vornehmen zu können. Alternativ besteht die Möglichkeit, dass die transportierten Waren mit entsprechenden Codierungen versehen sind, die über die Sensoren erfasst werden, sodass die Flurförderfahr-zeuge und damit auch die transportierten Waren eindeutig identifiziert werden können. In einem weiteren Schritt erfolgt die Zuordnung der Waren und damit der Flurförderfahrzeuge für die weitere Verarbeitungsreihenfolge, welche beispielsweise bei einer Fließbandarbeit von entscheidender Bedeutung ist, um die richtigen Komponenten zum richtigen Zeitpunkt zur weiteren Montage zur Verfügung zu stellen. Hierzu gehört im weiteren Schritt die Auswahl einer Schiene des Schienensystems als Parkposition für das identifizierte Flurförderfahrzeug. Ferner gehört dazu die Überwachung der Zufuhr und Entnahme der Flurförderfahrzeuge aus dem Schienensystem, um den aktuellen Status quo zu ermitteln und diesen beispielsweise in Echtzeit über den Speicher- und Serverdienst zur Verfügung zu stellen. Auf diese Weise wird erreicht, dass sämtliche Flurförderfahrzeuge sofort erfasst werden können und einer entsprechenden Schiene des Schienensystems zugeordnet werden, wobei insbesondere der aktuelle Ist-Zustand jederzeit bekannt ist, um beispielsweise die Entnahme der Flurförderfahrzeuge aus dem FIFO-Bahnhof zu veranlassen sowie den FIFO-Bahnhof immer wieder aufzufüllen. Das Cloud-Informationssystem dient hierbei zur Optimierung des FIFO-Bahnhofes durch eine Überwachung und Steuerung mithilfe des Speicher- und Serverdienstes, der sämtliche Bewegungen innerhalb des FIFO-Bahnhofes überwachen kann und zugeführte Flurförderfahrzeuge identifiziert, wobei im weiteren die Zuführung und Entnahme aus dem FIFO-Bahnhofe überwacht wird und unter Berücksichtigung der Montagesequenzen der erforderliche Nachschub an neuen Komponenten gesteuert werden kann.

Dadurch, dass einzelne Waren gegebenenfalls verspätet zum FIFO-Bahnhof transportiert werden ist in weiterer Ausgestaltung vorgesehen, dass eine priorisierte Auswahl einer Schiene des Schienensystems in Abhängigkeit der benötigten Waren durch den Zentralrechner erfolgt. Hierbei handelt es sich um Waren, die möglicherweise aufgrund von verspäteten Lieferungen oder sonstigen Gründen nicht zeitgemäß dem FIFO-Bahnhof zugeführt wurden. Soweit einzelne Flurförderfahrzeuge mit einer höheren Priorität ausgezeichnet sind, beispielsweise immer dann, wenn die Ware verspätet eingetroffen ist, so können diese Flurförderfahrzeuge einer Schiene zugeordnet werden, die ausschließlich für diesen Zweck vorgesehen ist und damit eine schnelle Entnahme der Waren aus dem FIFO-Bahnhof ermöglicht.

Soweit einzelne Waren in großen Mengen benötigt werden, die auf einem Flurförder-fahrzeug keinen Platz finden, so kann eine Zuordnung der häufig benötigten Waren beziehungsweise Flurförderfahrzeuge zu einer oder mehreren Schienen mit identischen Waren durch den Speicher- und Serverdienst erfolgen.

In ähnlicher Weise können auch Waren, die einem Warenlager oder Verkaufsräumen zugeführt werden, beim Einbringen erfasst werden. Hierbei besteht die Möglichkeit die Zuführung und Entnahme von Waren aus einem Warenlager oder einem Verkaufsraum über den Speicher- und Serverdienst zu überwachen und die Bestimmung des jeweiligen Lagerplatzes festzulegen oder zusätzlich durch eine optische Anzeige die Zuführung und Entnahme von Waren in oder aus dem Warenlager zu steuern.

Die aufgezeigten Möglichkeiten für einen FIFO-Bahnhof lassen sich zumindest teilweise für ein Warenlager oder Verkaufsräume umsetzen. Die dem Warenlager oder den Verkaufsräumen zugeführten Waren beziehungsweise Produkte können zunächst gescannt werden und diese Information über ein Mobilfunknetz an den Speicher- und Serverdienst (Cloud) übertragen werden. Durch optische Anzeigen oder die Ermittlung von elektronischen Daten über den Lagerort in einem Warenlager beziehungsweise Einlagerung in einen Verkaufsraum kann eine Positionsangabe bis zu einem Abverkauf festgelegt werden. Der wesentliche Vorteil besteht hierbei darin, dass ein optimiertes Verfahren zugrunde gelegt wird, welches den aktuellen Ist-Zustand sowohl des Warenlagers als auch der Verkaufsräume jederzeit anzeigen kann und damit einem Waren- und Wirtschaftssystem genügend Informationen vorliegen, um rechtzeitig neue Waren zu bestellen. Hierbei besteht ohne weiteres die Möglichkeit, dass eine direkte Einbindung der Lieferanten bzw. Hersteller erfolgen kann, die über den Speicher- und Serverdienst sofort informiert werden. Elektronische Etiketten eignen sich ebenso zur Verwendung in einem Warenlager und in Verkaufsräumen, um Informationen der eingelagerten Waren beziehungsweise der zum Verkauf angebotenen Waren auch für den Kunden ersichtlich werden zu lassen. Ein wesentlicher Vorteil besteht darin, dass die elektronischen Etiketten zentral, beispielsweise über den Speicher- und Serverdienst aktualisiert werden, sodass auch eine sofortige Preisanpassung erfolgen kann. Durch die Abrundung des intralogistischen Prozesses mit Einbindung der Hersteller und Lieferanten ist eine Optimierung möglich, welche äußerst zuverlässig und schnell ausgeführt werden kann. Ähnlich wie bei einem FIFO-Bahnhof können die elektronischen Etiketten mit zumindest einem Button ausgestattet werden, sodass die Hersteller und Lieferanten über zusätzlich angebotene Schnittstellen erforderliche Veränderungen, auch eine Umprogrammierung der Buttons, vornehmen können.

Mit Hilfe des aufgezeigten Verfahrens und des Cloud-Informationssystems wird auf diese Weise eine Optimierung des intralogistischen Prozesses erreicht, welcher in vorteilhafter Weise mit geringem Aufwand durchgeführt werden kann. Hierbei besteht die Möglichkeit durch die Verwendung eines Mobilfunknetzes ein Warenlager, Verkaufsräume oder einen FIFO-Bahnhof sukzessive zu erweitern, ohne das mit hohen Kosten gerechnet werden muss.

Die Erfindung wird im Weiteren anhand einer Figur näher erläutert.

Es zeigt
- Fig. 1: in einer perspektivischen Ansicht einen FIFO-Bahnhof mit weiteren Ausstattungsmerkmalen eines Kontroll- und Steuerungssystems,
- Fig. 2: in einer schematischen Übersicht die Funktionsweise des Verfahrens und
- Fig. 3: in einer weiteren schematischen Übersicht die Verwaltung eines Warenlagers mit Hilfe eines Speicher- und Serverdienstes.

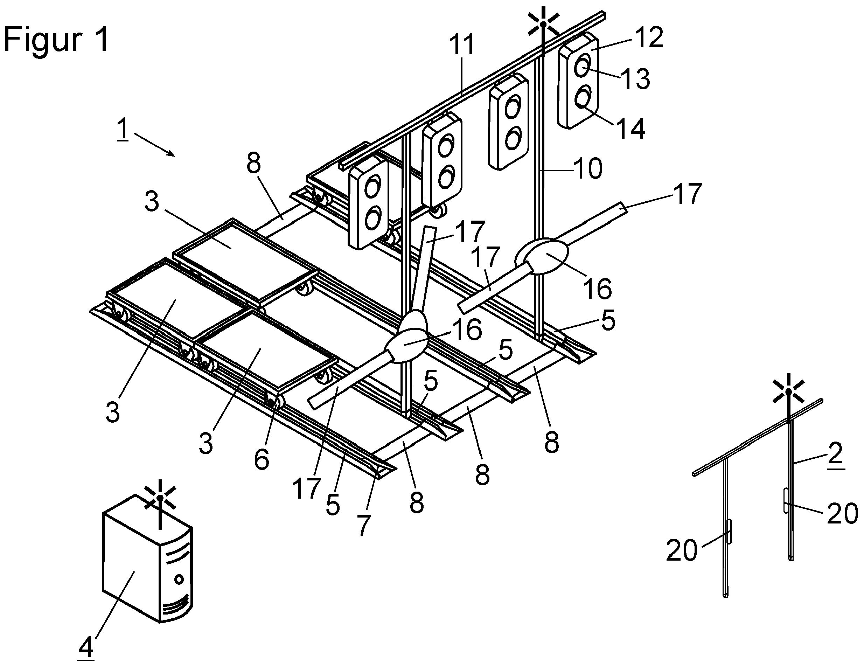

Figur 1 zeigt in einer perspektivischen Ansicht einen FIFO-Bahnhof 1, ein Portal 2 zum Scannen der Flurförderfahrzeuge 3.

Der FIFO- Bahnhof 1 besteht aus mehreren Schienen 5, die zur Aufnahme der Flurförderfahrzeuge 3 vorgesehen sind. Das gezeigte Ausführungsbeispiel sieht jeweils eine Schiene 5 für die Aufnahme zweier Räder 6 des Flurförderfahrzeuges 3 vor. Alternativ besteht ohne weiteres die Möglichkeit, dass auch Doppelschienen eingesetzt werden, um somit sämtliche Räder der Flurförderfahrzeuge 3 in den Schienen 5 aufzunehmen. Die Schienen besitzen jeweils ein Einlaufstück 7, um die Aufnahme der Flurförderfahrzeuge 3 zu erleichtern und sind zusätzlich über Verbindungselemente 8 miteinander verbunden, um den Abstand zwischen den Schienen 5 einzuhalten. Der FIFO-Bahnhof 1 weist im weiteren ein Gerüst 9 auf, welches aus vertikalen Stäben 10 und zumindest einem horizontalen Stab 11 besteht. An dem horizontalen Stab sind Ampeln 12 befestigt, wobei jeweils für eine Schiene 5 eine Ampel 12 vorgesehen ist. Die Ampeln 12 sind mit zwei Leuchten 13, 14 ausgestattet, welche durch die Farbe rot oder grün dem Bedienungspersonal signalisiert, welche Schiene 5 für ein aktuelles Flurförderfahrzeug 3 verwendet werden soll. Anstelle der Leuchtelemente 13, 14 in der Farbgestaltung rot und grün könnten ebenso Symbole verwendet werden. Die gezeigte Ampelanlage befindet sich eingangsseitig des FIFO-Bahnhofes 1, es besteht ebenso die Möglichkeit im rückwärtigen Bereich ausgangsseitig ebenfalls eine Ampelanlage vorzusehen, damit die Monteure wissen, welches Flurförderfahrzeug als nächstes aus dem FIFO-Bahnhof 1 entfernt werden darf. Alternativ ist in der schematischen Darstellung ein Schrankensystem 15 mit einer Schrankenbefestigung 16 und einer Schranke 17 dargestellt. Drei der Schranken 17 sind in einer geschlossenen Position dargestellt und eine der Schranken 17 befindet sich in einer geöffneten Position mit einer vertikalen Schrankenposition, sodass beispielsweise ein neues Flurförderfahrzeug 3 in die Schiene 5 eingeschoben werden kann. Sowohl die Ampelanlage als auch das Schrankensystem dienen dazu dem Bedienungspersonal aufzuzeigen, welche Schiene 5 für das gescannte Flurförderfahrzeug 3 vorgesehen ist.

Zur Identifizierung der Flurförderfahrzeuge 3 ist ein Portal 2 vorgesehen, durch welches die Flurförderfahrzeuge 3 entweder manuell hindurchgeschoben oder soweit es sich um selbstfahrende Flurförderfahrzeuge handelt, diese selbsttätig das Portal 2 durchfahren können. Das Portal 2 ist seitlich mit Sensorelementen 20 ausgestattet, welche eine Scannung der Flurförderfahrzeuge 3 oder der damit transportierten Waren ermöglichen. Die gescannten Daten werden einem Speicher- und Serverdienst (Cloud) über eine Mobilfunkanbindung zugeleitet, der die weitere Steuerungskoordinierung mit Freigabe einer Schiene 5 und Steuerung der Ampel 12 beziehungsweise der Schranken 17 übernimmt. Der Speicher- und Serverdienst kann hierbei die gescannten Waren jeweils einer bestimmten Schiene 5 zuordnen, sodass die Waren rechtzeitig zur weiteren Verwendung zur Verfügung gestellt werden können.

Das gezeigte Ausführungsbeispiel eines FIFO-Bahnhofes 1 kann sicherlich durch weitere Komponenten ergänzt werden, insbesondere kann eine Ampelanlage oder ein Schrankensystem auch ausgangsseitig des FIFO-Bahnhofes 1 vorgesehen werden, damit sowohl bei der Zuführung der Flurförderfahrzeuge 3 als auch bei der Entnahme der Flurförderfahrzeuge 3 eine korrekte Auswahl getroffen werden kann, um beispielsweise durch das Schrankensystem die Entnahme falscher Flurförderfahrzeuge 3 zu verhindern. Das gezeigte Ausführungsbeispiel besitzt insgesamt nur fünf Schienen 5, diese Schienenanzahl ist aber unbegrenzt und kann beliebig erweitert werden.

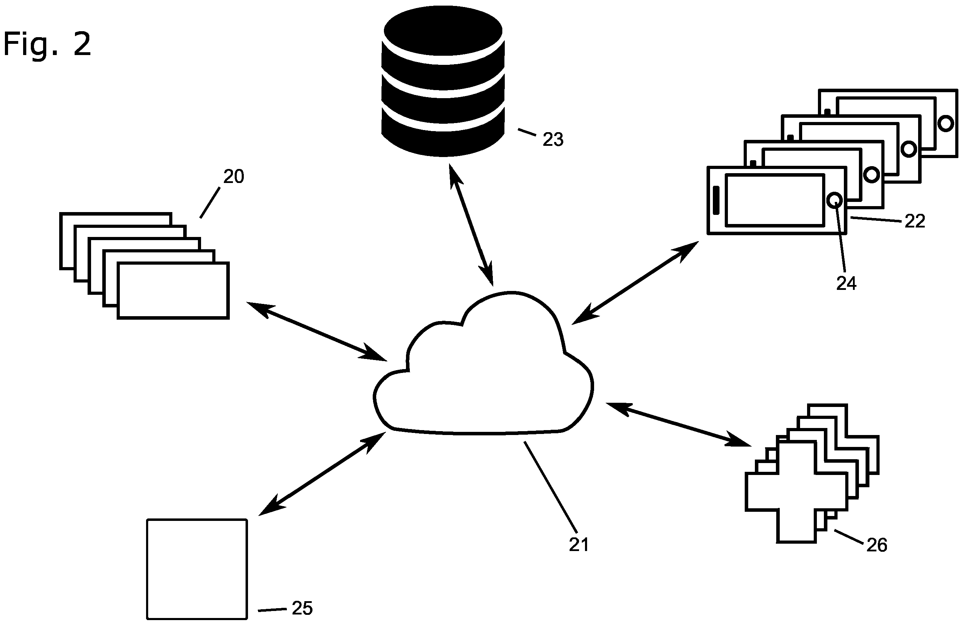

Figur 2 zeigt in einer schematischen Ansicht eine Verwirklichung der Verfahrensmerkmale. Zentraler Punkt ist ein Speicher- und Serverdienst (Cloud) 21, welcher über ein Mobilfunknetz die Kontrolle beispielsweise eines Warenlagers, Verkaufsräume oder eines FIFO-Bahnhofs ermöglicht. Sensorelemente 20 sind über das Mobilfunknetz mit der Cloud verbunden, und zwar sowohl zum Senden als auch zum Empfangen von Daten. Bei den Daten kann es sich beispielsweise um aktualisierte Daten handeln, die mit Hilfe der Sensorelemente erfasst wurden. Der Speicher- und Serverdienst 21 ist über ein Mobilfunknetz zusätzlich mit elektronischen Etiketten 22 verbunden, um ebenfalls Daten zu empfangen oder Daten zu senden. Beispielsweise können die elektronischen Etiketten 22 aktualisiert und somit mit neuen Informationen versehen werden, wenn beispielsweise ein neuer Preis in einem Verkaufsraum angezeigt werden soll. Ebenso könnte eine Aktualisierung der Informationen beim Austausch eines Lagerplatzes innerhalb eines Warenlagers erfolgen. Um die Daten auszuwerten und zu speichern verfügt der Speicher- und Serverdienst zumindest über eine Datenbank 23 die innerhalb der Cloud eingebunden ist. Zusätzlich können die elektronischen Etiketten 22 mit einem Button 24 ausgestattet sein, welcher bestimmte Funktionen beinhaltet und von einem Kunden oder Lieferanten über eine Konfigurationsschnittstelle 25 den Wünschen entsprechend angepasst werden kann. Des Weiteren sind weitere optionale Erweiterungen 26 möglich, die den Datenaustausch mit Herstellern, Lieferanten und Endkunden optimiert.

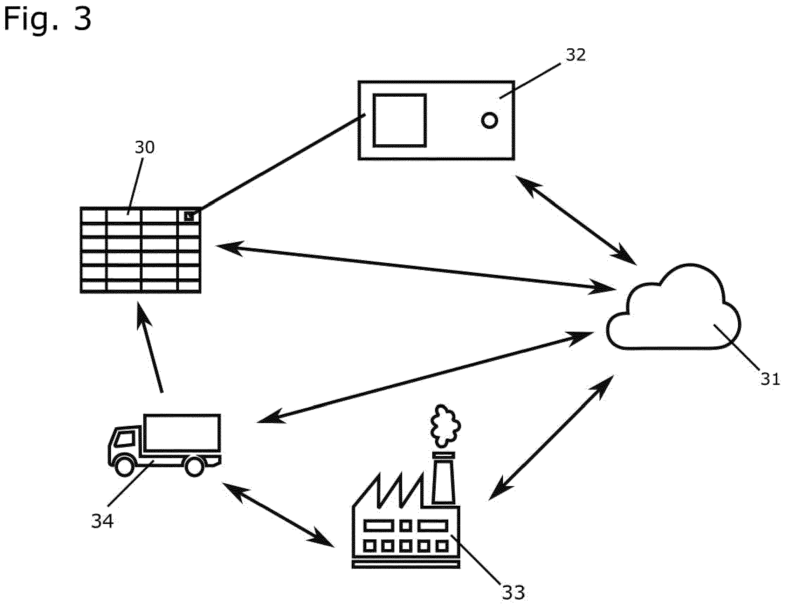

Figur 3 zeigt in einer schematischen Ansicht die Verwendung der verschiedenen Komponenten in einem Warenlager 30, und zwar besteht ebenfalls eine Verbindung zu einem Speicher- und Serverdienst (Cloud) 31, wobei die Informationen über die Anzahl der Waren und die Position innerhalb eines Warenlagers von dem Warenlager 30 ausgehend dem Speicher- und Serverdienst 31 zur Verfügung gestellt werden. Hierzu besteht die Möglichkeit das Warenlager 30 mit elektronischen Etiketten 32 auszustatten, die weitere Informationen über die eingelagerten Waren enthalten und über die Cloud 31 aktualisiert werden können. Die in einer Fabrik 33 hergestellten Waren werden dem Warenlager 30 mit Lieferfahrzeugen 34 zugeführt, wobei sowohl die Hersteller als auch die Lieferanten ebenfalls Daten zwischen der Cloud 31 austauschen können und somit beim Unterschreiten einer bestimmten Lagermenge sofort weitere Lieferungen in Auftrag gegeben werden können.

### Bezugszeichenliste

- 1: FIFO-Bahnhof
- 2: Portal
- 3: Flurförderfahrzeug
- 5: Schiene
- 6: Rad
- 7: Einlaufstück
- 8: Verbindungselement
- 9: Gerüst
- 10: Stab
- 11: Stab
- 12: Ampel
- 13: Leuchte
- 14: Leuchte
- 15: Schrankensystem
- 16: Schrankenbefestigung
- 17: Schranke
- 20: Sensorelement
- 21: Speicher- und Serverdienst (Cloud)
- 22: elektronische Etiketten
- 23: Datenbank
- 24: Button
- 25: Konfigurationsschnittstelle
- 26: Erweiterung
- 30: Warenlager
- 31: Speicher- und Serverdienst (Cloud)
- 32: elektronische Etiketten
- 33: Fabrik
- 34: Lieferfahrzeug

## Patentansprüche

1. Verfahren zur Steuerung und Überwachung eines intralogistischen Prozesses eines Warenlagers (30) oder eines FIFO-Bahnhofs (1) für Flurförderfahrzeuge, umfassend:
- einen zentralen onlinebasierten Speicher- und Serverdienst (Cloud) (21, 31),
- kabellose Sensorelemente (20) für ein Lager, Warenbehälter, Etiketten und/oder Flurförderfahrzeuge, welche über eine Mobilfunkanbindung Daten senden und/oder empfangen,
- Echtzeiterfassung von Bestandsveränderungen,
- Echtzeitübertragung der Sensordaten zum Speicher- und Serverdienst (Cloud) (21, 31),
- Empfang von Daten des Speicher- und Serverdienstes (21, 31) soweit für die Anzeige von Informationen erforderlich,
- Auswertung und Bereitstellung der Sensordaten für autorisierte Nutzer über einen Mobilfunkzugang.

2. Verfahren nach Anspruch 1,
**dadurch gekennzeichnet,**
**dass** die Waren oder Flurförderfahrzeuge sowie die damit transportierten Waren durch optische, kapazitive oder induktive kabellose Sensoren (20) mit Mobilfunkanbindung erfasst werden.

3. Verfahren nach Anspruch 1 oder 2,
**dadurch gekennzeichnet,**
**dass** eine Ausstattung der Warenlager, Warenbehälter oder Flurförderfahrzeuge durch elektronische Etiketten (22, 32) mit Mobilfunkanbindung erfolgt, und/oder dass Informationen über die Waren in einem Lager oder die mit einem Flurförderfahrzeug transportierten Waren über elektronische Etiketten (22, 32) dem Speicher- und Serverdienst (21, 31) bereitgestellt werden.

4. Verfahren nach einem der Ansprüche 1, 2 oder 3,
**dadurch gekennzeichnet,**
**dass** durch Sensorelemente (20) die Zuführung von Produkten in ein Warenlager (30) oder von Flurförderfahrzeugen mit Produkten in einen FIFO-Bahnhof (1) und ebenso die Entnahme erfasst wird, und/oder dass eine Zuweisung des Lagerplatzes innerhalb eines Warenlagers (30)oder einer Schiene eines FIFO-Bahnhofes (1) durch den Speicher- und Serverdienst (Cloud) (21, 31) erfolgt.

5. Verfahren nach einem der Ansprüche 1 bis 4,
**dadurch gekennzeichnet,**
**dass** bei Vorliegen eines Mindestbestandes im Warenlager oder eine festgelegte Anzahl von Flurförderfahrzeugen mit Waren unterschritten wird, ein Bestellvorgang bei einem Produkthersteller beziehungsweise eine Zuführung weiterer Flurförderfahrzeuge ausgelöst wird, und/oder dass Warnsignale in Form von optischen und akustischen Signalen erzeugt werden, eine Rückmeldung an ein Waren-Wirtschaftssystem und/oder einen Sachbearbeiter erfolgt, soweit Lagerbestände nicht in einem voreingestellten Zeitraum ausgeglichen werden, und/oder dass eine Ausgabe von Informationen an einen Supervisor erfolgt, wenn ein dauerhaftes Unterschreiten des Lagerbestandes vorliegt oder der Nachschub von Flurförderfahrzeugen unterbrochen wird.

6. Verfahren nach einem der Ansprüche 1 bis 5,
**dadurch gekennzeichnet,**
**dass** eine von dem Speicher- und Serverdienst (21, 31) gesteuerte Anzeigeeinheit zur Darstellung des aktuellen Ist-Zustandes des Warenlagers (30) oder des Schienensystems in einer Grafik zur Verfügung gestellt wird.

7. Verfahren nach einem der Ansprüche 1 bis 6,
**dadurch gekennzeichnet,**
**dass** die Etiketten (22, 32) aus ESL (Elektronic Shelf Label) Etiketten bestehen, welche mit einem nicht-flüchtigen Display ausgestattet zur Darstellung von Grafikdaten und alphanummerischen Informationen verwendet werden und mit einer stationären Energieversorgung in Form einer langlebigen Batterie ausgestattet sind oder elektromagnetische Energie aus einem Funkfeld entnehmen.

8. Verfahren nach einem der Ansprüche 1 bis 7,
**dadurch gekennzeichnet,**
**dass** die elektronischen Etiketten zumindest einen Button (24) aufweisen, dessen Funktion im Speicher- und Serverdienst (21, 31) hinterlegt ist und vom Anwender frei programmierbar ist, und/oder dass jedem Anwender eine Schnittstelle zur Verfügung steht, um aktuelle Daten abzurufen, um den Status der Warenlieferung zu überprüfen oder die Funktion des zumindest einen Buttons zu ändern.

9. Cloud-Informationssystem für einen intralogistischen Prozess zur Bestandsüberwachung eines Warenlagers (30) oder eines FIFO-Bahnhofes (1) für Flurförderfahrzeuge, umfassend:
- einen zentralen online basierten Speicher- und Serverdienst (Cloud) (21, 31),
- kabellose Sensorelemente (20) mit einer Mobilfunkanbindung zur Identifizierung der Waren, Warenbehälter, Etiketten und/oder Flurförderfahrzeuge sowie der damit transportierten Waren,
- Erfassung der Zuführung und Entnahme von Waren aus dem Warenlager (30) oder von Flurförderfahrzeugen aus dem FIFO-Bahnhof (1) durch kabellose Sensorelemente (20),
- Übertragung der Sensordaten zu einem onlinebasierten Speicher- und Systemdienst (Cloud) (21, 31) in Echtzeit und
- Empfang von Daten aus der Cloud (21, 31) über das Mobilfunknetz zur Anzeige durch ein elektronisches Etikett (22, 32).

10. Cloud-Informationssystem nach Anspruch 9,
**dadurch gekennzeichnet,**
**dass** die Waren oder Flurförderfahrzeuge (3) sowie die damit transportierten Waren durch optische, kapazitive oder induktive Sensoren (20) einer Erfassungseinrichtung mit Mobilfunkanbindung scannbar sind.

11. Cloud-Informationssystem nach Anspruch 9 oder 10,
**dadurch gekennzeichnet,**
**dass** eine optische Anzeige in Form einer Ampel (12), durch farblich gekennzeichnete Pfeile, Sperrsymbole und/oder eine Schranke (17) für jede Schiene (5) für die Zuführung und Entnahme der Flurförderfahrzeuge (3) eingangsseitig und ausgangsseitig vorhanden ist, welche von dem Speicher- und Serverdienst ansteuerbar sind.

12. Cloud-Informationssystem nach Anspruch 9, 10, oder 11,
**dadurch gekennzeichnet,**
**dass** eine Auswahl des Warenlagers (30) durch den Speicher- und Serverdienst (21, 31) erfolgt, und/oder dass eine optische Anzeige für die Zuführung und Entnahme von Waren in oder aus dem Warenlager (30) vorgesehen ist.

13. Cloud-Informationssystem nach einem der Ansprüche 9 bis 12,
**dadurch gekennzeichnet,**
**dass** eine von dem Speicher- und Serverdienst (21, 31) priorisierte Auswahl der Schiene (5) des Schienensystems in Abhängigkeit von den benötigten Waren erfolgt, und/oder dass eine von dem Speicher- und Serverdienst (21, 31) zugeordnete Position innerhalb des Warenlagers (30) erfolgt.

14. Cloud-Informationssystem nach einem der Ansprüche 9 bis 12,
**dadurch gekennzeichnet,**
**dass** die Anzeige den aktuellen Ist-Zustand des Schienensystems in einer graphischen Anzeige darstellt, und/oder dass die graphische Anzeige des Warenlagers (30) oder des Schienensystems einen Füllstandanzeiger aufweist, und/oder dass die Displayanzeige des elektronischen Etiketts (22, 32) weitere Daten über die auf den Flurförderfahrzeugen (3) oder im Warenlager (30) gelagerten Waren anzeigt.
